# EUROPÄISCHE PATENTSCHRIFT

(11) **EP 1 558 945 B1**
(45) Veröffentlichungstag und Bekanntmachung des Hinweises auf die Patenterteilung: **05.04.2006**
(21) Anmeldenummer: 03758005.7
(22) Anmeldetag: 17.10.2003
(51) Int. Cl.: G01S 13/93, G01S 15/93

(54) **VERFAHREN ZUR ERMITTLUNG VON GEOMETRIEDATEN FÜR EINPARKVORGÄNGE VON FAHRZEUGEN**
METHOD FOR THE DETERMINATION OF GEOMETRICAL DATA FOR PARKING ASSIST IN VEHICLES
PROCEDE DE DETERMINATION DE DONNEES GEOMETRIQUES POUR L'ASSISTANCE AU STATIONNEMENT DE VEHICULES

(30) Priorität: 06.11.2002 DE 10251558
(43) Veröffentlichungstag der Anmeldung: 03.08.2005
(73) Patentinhaber: Bayerische Motoren Werke Aktiengesellschaft, 80809 München (DE)
(72) Erfinder: SPANNHEIMER, Helmut, 85630 Grasbrunn (DE); GRÄF, Harald, 84144 Geisenhausen (DE); GENSLER, Frank, 85579 Neubiberg (DE); MAIER, Dietmar, 84095 Furth (DE); MEITINGER, Karl-Heinz, 83308 Trostberg (DE); PRUCKNER, Alfred, 81543 München (DE)
(86) Internationale Anmeldenummer: PCT/EP2003/011509
(87) Internationale Veröffentlichungsnummer: WO 2004/042423

(56) Entgegenhaltungen:
- DE-A- 3 813 083
- PATENT ABSTRACTS OF JAPAN vol. 018, no. 247 (P-1735), 11. Mai 1994 (1994-05-11) & JP 06 028598 A (NISSAN MOTOR CO LTD), 4. Februar 1994 (1994-02-04)

## Beschreibung

Die vorliegende Erfindung betrifft ein Verfahren zur Ermittlung von Geometriedaten für Einparkvorgänge von Fahrzeugen gemäß Patentanspruch 1.

Aus der DE 38 13 083 A1 ist eine Einparkeinrichtung für Fahrzeuge bekannt, die Bewegungssensoren zum Messen der Bewegungsstrecke des Wagens aufweist, Hindernissensoren zum Ermitteln der Position der Hindernisse um einen Wagen herum und einen Mikrocomputer, der in Übereinstimmung mit den Instruktionen des Fahrers und der von den Bewegungssensoren und den Hindernissensoren gelieferten Daten Anweisungen für den Fahrer erzeugt, den Wagen nach vorne zu fahren, anzuhalten, nach links oder rechts zu fahren oder rückwärts zu fahren. Der Mikrocomputer kann ferner die Lenkung, die Gangschaltung, das Gas und das Bremssystems ansteuern.

In zukünftigen Fahrzeuggenerationen werden in zunehmendem Maße Fahrerassistenzsysteme zum Einsatz kommen. Bereits weit verbreitet sind Einparkhilfssysteme, bei denen mittels Ultraschallsensoren beim Einparken der Abstand von Hindernissen im Front- und/oder Heckbereich des Fahrzeugs gemessen wird und der Fahrer eine akustische Rückmeldung erhält.

Aus der DE 196 16 447 A1 ist ein Verfahren zur Ermittlung der Länge einer Parklücke zwischen einem vorderen und einem hinteren parkenden Fahrzeug bekannt. Zur Messung der Parklückenlänge ist an dem zu parkenden Fahrzeug eine Ultraschall- oder Radarsende-/Empfangseinrichtung angeordnet. Während einer langsamen Vorbeifahrt des zu parkenden Fahrzeugs an den parkenden Fahrzeugen wird die Position des zu parkenden Fahrzeugs in Fahrtrichtung relativ zum vorderen Ende des hinteren parkenden Fahrzeugs und ausgehend von dieser Position der Abstand des vorderen parkenden Fahrzeugs vom zu parkenden Fahrzeug ermittelt. Aus den Messwerten kann dann der Abstand der beiden parkenden Fahrzeuge, d. h. die Länge der Parklücke ermittelt werden. Erwähnt ist ferner, dass es zweckmäßig sein kann, zur Ermittlung der Position des fahrenden Fahrzeugs relativ zum vorderen Ende des hinteren Fahrzeugs den seitlichen Abstand des fahrenden Fahrzeugs zum hinteren parkenden Fahrzeug zu messen und zu berücksichtigen. Wie dies im einzelnen erfolgen soll wird in der DE 196 16 447 A1 nicht näher erläutert.

Aufgabe der Erfindung ist es, ein Verfahren zu schaffen, mit dem mit möglichst geringem technischen Aufwand möglichst exakte für ein Einparkvorgänge relevante Geometriedaten ermittelbar sind.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist es, für ein zu parkendes Fahrzeug, das seitlich am Parkplatz bzw., an der Parklücke vorbeifährt, Geometriedaten zu bestimmen, die für den Einparkvorgang bzw. für einen elektronisch gesteuerten Einparkvorgang relevant sind. Relevant sind insbesondere
- der Winkel zwischen der Fahrzeuglängsachse und dem Fahrbahnrand sowie hieraus ableitbar
- der Abstand zwischen einem Sensorpunkt am Fahrzeug und dem Fahrbahnrand, d.h. der Abstand zwischen dem Fahrzeug und dem Fahrbahnrand sowie
- die effektive Länge des Parkplatzes bzw. der Parklücke.

Der Kern der Erfindung besteht darin, bei der Bestimmung des Winkels zwischen der Fahrzeuglängsachse und dem Fahrbahnrand die Querbewegung des zu parkenden Fahrzeugs "quer zum Parkplatz bzw, quer zur Parklücke" zu berücksichtigen. Zur Bestimmung des Winkels zwischen der Fahrzeuglängsachse und dem Fahrbahnrand ist am Fahrzeug ein Abstandssensor vorgesehen, zum Beispiel ein Ultraschall-, Radar- oder Lasersensor, mit dem der seitliche Abstand zwischen dem Fahrzeug, oder genauer gesagt, zwischen dem Sensorpunkt am Fahrzeug und dem Fahrbahnrand gemessen wird.

Gemäß der Erfindung wird der Winkel zwischen der Fahrzeuglängsachse und dem Fahrbahnrand als Summe eines "Querbewegungswinkels" und eines "Fahrbahnrandwinkels" aufgefasst. Bei Einparkvorgängen ist häufig zu beobachten, dass der Fahrer nicht exakt parallel an der Parklücke vorbeifährt. Vielmehr wird häufig im ersten Drittel oder in der Mitte der Parklücke kurz in Richtung zur Parklücke hin eingelenkt und anschließend schräg nach vorne weitergefahren und angehalten, um anschließend rückwärts einzuparken. Im Abhängigkeit vom Lenkverhalten des Fahrers macht das zu parkende Fahrzeug somit beim Vorbeifahren an der Parklücke eine gewisse Querbewegung. Als "Querbewegungswinkel" wird im folgenden der Winkel zwischen der momentanen Fahrzeuglängsrichtung beim Vorbeifahren am Parkplatz bzw. an der Parklücke und einer "vorgegebenen Längsrichtung" verstanden. Unter der "vorgegebenen Längsrichtung" versteht man beispielsweise die Fahrtrichtung des Fahrzeugs vor dem Einlenkbeginn, das heißt vor einer "Fahrzeugkursänderung". Ganz allgemein kann man unter der vorgegebenen Längsrichtung die Fahrtrichtung des Fahrzeugs bei Geradeausfahrt verstehen. Die vorgegebene Längsrichtung kann im wesentlichen parallel zum Fahrbahnrand sein.

Es kann aber auch sein, dass das Fahrzeug geradeaus fährt, aber schräg zum Fahrbahnrand. Der Fahrbahnrand ist dann nicht parallel zu der gewählten vorgegebenen Längsrichtung. Der Winkel zwischen der vorgegebenen Längsrichtung und dem Fahrbahnrand wird im folgenden als "Fahrbahnrandwinkel" bezeichnet. Der gesuchte Winkel zwischen der Fahrzeuglängsachse und dem Fahrbahnrand ergibt sich als Summe des Querbewegungswinkels und des Fahrbahnrandwinkels.

Nach einer Weiterbildung der Erfindung wird der Querbewegungswinkel aus einem "Wegverhältnis" ermittelt, nämlich aus einer "Querbewegungs-Abstandskomponente" und dem vom Fahrzeug beim Entlangfahren am Parkplatz bzw. an der Parklücke zwischen zwei Messpunkten zurückgelegten Weg. Unter der "Querbewegungs-Abstandskomponente" versteht man die Querbewegung des Sensorpunktes des Fahrzeugs in Bezug auf die vorgegebenen Längsrichtung. Die Querbewegungs-Abstandskomponente wird ermittelt durch Messen des vom Fahrzeug beim Entlangfahren am Parkplatz zwischen zwei Messpunkten zurückgelegten Weges und des vom Fahrer eingesteuerten Lenkzustandes, das heißt des Lenkwinkels an der Lenksäule oder der Lenkwinkel der gelenkten Räder. Aus dem zwischen zwei Messpunkten zurückgelegten Weg und dem Lenkzustand kann über ein vorgegebenes mathematisches Fahrzeugmodell und trigonometrische Umformungen die Querbewegungs-Abstandskomponente zwischen zwei Messpunkten ermittelt werden. Der Querbewegungswinkel ergibt sich hieraus durch weitere einfache trigonometrische Umformung.

Zur Ermittlung des Fahrbahnrandwinkels wird folgendermaßen vorgegangen. Zunächst wird die Differenz zweier Abstandsmesswerte zwischen dem fahrzeugfesten Sensorpunkt und dem Fahrbahnrand ermittelt. Von dieser Differenz wird anschließend die zuvor ermittelte Querbewegungs-Abstandskomponente subtrahiert. Die sich ergebende Differenz wird im folgenden als "Fahrbahnrand-Abstandskomponente" bezeichnet. Die Fahrbahnrand-Abstandskomponente kann als "Schrägheit" des Fahrbahnrandes in Bezug auf die zugrunde gelegte, vorgegebene Längsrichtung interpretiert werden. Aus der Fahrbahnrand-Abstandskomponente und dem vom Fahrzeug beim Entlangfahren am Parkplatz bzw. an der Parklücke zurückgelegten Weg kann durch trigonometrische Umformung der Fahrbahnrandwinkel ermittelt werden. Wie bereits erwähnt, ist der Fahrbahnrandwinkel der momentane Winkel zwischen der vorgegebenen Längsrichtung und dem Fahrbahnrand.

Anschließend werden der Fahrbahnrandwinkel und der Querbewegungswinkel addiert, woraus sich der gesuchte Winkel zwischen der Fahrzeuglängsrichtung und dem Fahrbahnrand ergibt.

Die "Unterteilung" des Winkels zwischen der Fahrzeuglängsachse und dem fahrbaren Rand in einen "Querbewegungswinkel" und einen "Fahrbahnrandwinkel" hat mit Blick auf die erreichbare Messgenauigkeit ganz wesentliche Vorteile gegenüber einer "direkten" Ermittlung des gesuchten Winkels aus zwei aufeinanderfolgenden Abstandsmesswerten.

Der Querbewegungswinkel kann relativ problemlos mit hoher Genauigkeit bestimmt werden. Hierfür erforderlich sind nämlich lediglich ein genügend genaues Fahrzeugmodell, der vom Fahrzeug zwischen zwei Messpunkten zurückgelegte Weg, der beispielsweise über ABS-Sensoren bestimmt werden kann, sowie der Lenkzustand des Fahrzeugs, der beispielsweise durch Lenkwinkelsensoren an den lenkbaren Rädern oder an der Lenksäule gemessen werden kann.

Wesentlich problematischer ist die möglichst genaue Ermittlung des Fahrbahnrandwinkels. Hierzu muss nämlich zunächst der Abstand zwischen dem fahrzeugfesten Abstandssensor und dem Fahrbahnrand ermittelt werden. Diese Abstandsmessung kann durch diverse Störfaktoren fehlerhaft sein. Messfehler können beispielsweise durch "krummlinige" Randsteine, auf der Fahrbahn liegende Kieselsteine, Gullydeckel oder am Fahrbahnrand liegende Gegenstände hervorgerufen werden.

Zur "Glättung" von Messfehlern bei der Bestimmung des Fahrbahnrandwinkels ist es daher sinnvoll, in kurzen Abständen von beispielsweise 2,5 cm in Fahrtrichtung des Fahrzeuges gesehen Abstandsmessungen durchzuführen. Auf diese Weise erhält man eine Vielzahl von Messwerten. Durch Wiederholung des oben beschriebenen Verfahrens zur Ermittlung von Fahrbahnrandwinkeln erhält man entsprechend mehrere Fahrbahnrandwinkel, aus denen ein Mittelwert, das heißt ein mittlerer Fahrbahnrandwinkel gebildet werden kann. Durch eine derartige "Mittelung" können einzelne "Ausreißer" weitgehend eliminiert werden und ein hinreichend genaues Ergebnis für den Fahrbahnrandwinkel erhalten werden.

Ein weiterer ganz wesentlicher Parameter für eine automatische Steuerung bzw. Regelung eines Einparkvorgangs ist der momentane Abstand des Fahrzeugs vom Fahrbahnrand, oder genauer gesagt, der Abstand eines fahrzeugfesten Sensorpunkts vom Fahrbahnrand.

Prinzipiell könnte der Abstand durch eine einfache Abstandsmessung ermittelt werden. Wie bereits erläutert, können hierbei diverse Messfehler auftreten. Folglich ist die Genauigkeit einzelner Messwerte nur schwer abschätzbar. Einzelmessungen können im Extremfall völlig unbrauchbar sein. Aus diesem Grund ist es auch hier von Vorteil, einen "Abstandsmittelwert" zu ermitteln.

Nach einer Weiterbildung der Erfindung wird hierbei wie folgt vorgegangen. Zunächst werden nacheinander während des Vorbeifahrens des Fahrzeugs an der Parklücke mehrere Abstandswerte zwischen dem fahrzeugfesten Sensorpunkt und dem Fahrbahnrand gemessen. Von den gemessenen Abstandswerten werden jeweils die oben erläuterte "Querbewegungs-Abstandskomponente" und die "Fahrbahnrand-Abstandskomponente" subtrahiert. Aus den erhaltenen Werten wird dann ein Mittelwert gebildet.

Vereinfacht ausgedrückt werden also zunächst aus den einzelnen Abstandsmesswerten jeweils die Querbewegungs-Abstandskomponente und die Fahrbahnrand-Abstandskomponente "herausgerechnet". Aus den erhaltenen Werten wird ein Mittelwert gebildet. Der momentane Abstand des fahrzeugfesten Sensors vom Fahrbahnrand wird dann durch Addition des erhaltenen Mittelwerts mit den zuvor rausgerechneten Querbewegungs-Abstandskomponenten und den Fahrbahnrand-Abstandskomponenten erhalten. Auf diese Weise kann der momentane tatsächliche Abstand des fahrzeugfesten Sensors vom Fahrbahnrand mit hoher Genauigkeit ermittelt werden. Messfehler werden um so besser "geglättet", je größer die Anzahl der in die Berechnung eingehenden Abstandsmesswerte ist.

Ein weiterer wesentlicher Parameter für die Automatisierung von Einparkvorgängen ist die effektive Parklückenlänge. Wie bereits erläutert, lenken viele Fahrer beim Vorbeifahren an einer Parklücke zunächst kurz zur Parklücke hin ein und fahren dann schräg weiter nach vorne, halten an und parken anschließend rückwärts ein. Der vom Fahrzeug zurückgelegte Weg im Bereich der Parklücke ist also gekrümmt und somit länger als die effektive Parklückenlänge. Mit dem oben beschriebenen Verfahren kann beim Vorbeifahren an der Parklücke an einer Vielzahl von Messpunkten jeweils der Winkel zwischen der Fahrzeuglängsachse und dem Fahrbahnrand ermittelt werden. Nach einer Weiterbildung der Erfindung erhält man durch "Projektion" der Fahrzeugtrajektorie, das heißt des vom Fahrzeug zurückgelegten Weges auf den Fahrbahnrad die effektive Parklückenlänge.

Mathematisch kann die effektive Parklückenlänge somit messintervallweise durch trigonometrische Umformung aus dem vom Fahrzeug zurückgelegten Weg und dem Winkel zwischen der Fahrzeuglängsachse und dem Fahrbahnrand in den einzelnen Messintervallen ermittelt werden.

Das hintere bzw. vordere Ende einer Parklücke kann messtechnisch folgendermaßen ermittelt werden. Beim Vorbeifahren des zu parkenden Fahrzeugs an der Parklücke tritt beim Passieren des Abstandssensors am hinteren Parklückenende ein positiver Sprung im Abstandsmesssignal auf. Der vom Abstandssensor registrierte Abstand zum Fahrbahnrand nimmt also "schlagartig" zu. Dementsprechend macht der gemessene Abstand einen negativen Sprung, wenn der Abstandssensor das vordere Parklückenende passiert.

Um Störgrößen auszuschalten, bzw. Messfehler zu glätten, können auch bei der Bestimmung des hinteren und vorderen Endes einer Parklücke mehrere nacheinander gemessene Messsignale berücksichtigt werden. Beispielsweise kann vorgesehen sein, dass auf ein Parklückenende erst dann erkannt wird, wenn eine vorgegebenen Mindestanzahl von Messwerten um mehr als einen vorgegebenen Wert vom bisherigen Abstandsmittelwert abweichen.

Im folgenden wir die Erfindung im Zusammenhang mit der Zeichnung näher erläutert. Es zeigen:
- Figur 1: das Grundprinzip zur Ermittlung des Winkels zwischen der Fahrzeuglängsrichtung und dem Fahrbahnrand;
- Figur 2: das Grundprinzip zur Ermittlung des seitlichen Abstandes zum Fahrbahnrand; und
- Figur 3: das Grundprinzip zur Ermittlung der effektiven Parklückenlänge.

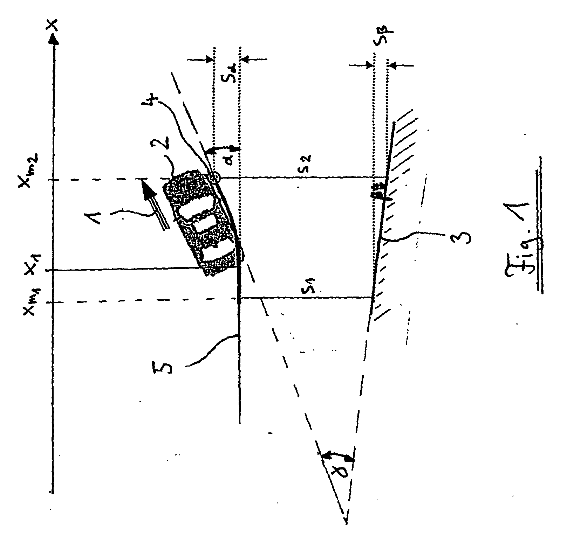

**Figur 1** beschreibt das Grundprinzip zur Bestimmung des Winkels zwischen der Längsachse 1 eines Fahrzeuges 2 und einem Fahrbahnrand, der hier schematisch als Bordstein 3 dargestellt ist. Der Winkel zwischen der Fahrzeuglängsachse 1 und dem Fahrzeugrand 3 ist hier mit γ bezeichnet. Bei dem hier gezeigten Ausführungsbeispiel ist im vorderen rechten Kotflügelbereich des Fahrzeugs 2 ein Abstandssensor 4 angeordnet.

Zum leichteren Verständnis ist ferner eine Wegkoordinate x eingezeichnet. In einem Bereich "links" von x₁ fährt das Fahrzeug gerade aus, bei x₁ lenkt es nach links ein, was zu einer Kursänderung führt. Das Bezugszeichen 5 bezeichnet die "Sensorspur" während des Fahrvorgangs des Fahrzeugs 2.

Wie bereits erwähnt fährt das Fahrzeug 2 im Bereich links von x₁ gerade aus. Dementsprechend ist in diesem Bereich die Sensorspur 5 ebenfalls eine Gerade. Dass das Fahrzeug gerade aus fährt, kann beispielsweise durch Lenksensoren an den lenkbaren Rädern oder an der Lenkspindel ermittelt werden. Die Richtung der Sensorspur im Bereich links von X₁, das heißt bei Geradeausfahrt, wird im folgenden als "vorgegebene Längsrichtung" bezeichnet.

Bei der Ermittlung des Winkels γ werden im folgenden ein "Querbewegungswinkel" α und ein "Fahrbahnrandwinkel" β unterschieden. Der Querbewegungswinkel α ist der Winkel zwischen der momentanen Fahrzeuglängsrichtung 1 und der vorgegebenen Längsrichtung 5. Der Fahrbahnrandwinkel β ist im folgenden definiert als der Winkel zwischen der vorgegebenen Längsrichtung 5 und dem Fahrbahnrand 3. Wie aus Figur 1 ersichtlich ist, ergibt sich der Winkel γ als Summe der Winkel α und β.

Der Querbewegungswinkel α wird wie folgt ermittelt. Zunächst wird eine "Querbewegungs-Abstandskomponente" s_{α} ermittelt, die aus einer Querbewegung des Fahrzeugs zwischen zwei aufeinanderfolgenden Messpunkten Xₘ₁ und Xₘ₂ quer zu der vorgegebenen Längsrichtung 5 resultiert. Die Querbewegungs-Abstandskomponente s_{α} zwischen zwei aufeinanderfolgenden Messpunkten Xₘ₁ und Xₘ₂ wird ermittelt, durch Messen des vom Fahrzeug 2 zwischen den beiden Messpunkten Xₘ₁ und Xₘ₂ zurückgelegten Weges und des Lenkzustandes des Fahrzeugs 2 im Bereich zwischen den beiden Messpunkten xₘ₁ und xₘ₂ sowie eines vorgegebenen Bewegungsmodells des Fahrzeugs 2. Der vom Fahrzeug zwischen den beiden Messpunkten xₘ₁ und xₘ₂ zurückgelegte Weg kann beispielsweise durch Raddrehzahlsensoren (ABS-Sensoren) gemessen werden. Der Lenkzustand des Fahrzeugs kann durch Lenkwinkelsensoren an den Rädern oder an der Lenksäule gemessen werden. Durch trigonometrische Umformung erhält man aus dem zwischen den beiden Messpunkten xₘ₁ und xₘ₂ vom Fahrzeug zurückgelegten Weg und aus der Querbewegungs-Abstandskomponente s_{α} den Querbewegungswinkel α für das Messintervall [xₘ₁,xₘ₂]. In der oben beschriebenen Weise kann für eine Vielzahl von Messintervallen [xₘᵢ,xₘᵢ₊₁] jeweils die Querbewegungs-Abstandskomponente s_{α} bzw. der Querbewegungswinkel α ermittelt werden.

Der Fahrbahnrandwinkel β wird wie folgt ermittelt. Zunächst wird mit dem Abstandssensor 4 an den Messpunkten xₘ₁ und xₘ₂ jeweils der Abstand s₁, s₂ zwischen dem Abstandssensor 4 und dem Fahrbahnrand 3 ermittelt. Anschließend wird von der Differenz s₂ - s₁ der beiden Abstandsmesswerte die Querbewegungs-Abstandskomponente s_{α} subtrahiert. Hieraus erhält man die "Fahrbahnrand-Abstandskomponente" für das Messintervall [xₘ₁,xₘ₂]. Die Fahrbahnrand-Abstandskomponente wird im folgenden mit sβ bezeichnet. Aus dem vom Fahrzeug 2 im Messintervall [xₘ₁,xₘ₂] zurückgelegten Weg und der Fahrbahnrand-Abstandskomponente s_{β} kann durch trigonometrische Umformung der Fahrbahnrandwinkel β ermittelt werden.

Der gesuchte Winkel γ ergibt sich als Summe aus α + β.

Da bei der Messung des Abstandes vom Abstandssensor 4 zum Fahrbahnrand 3 Störgrößen bzw. Messfehler auftreten können, sollte der Fahrbahnrandwinkel β mehrfach nacheinander ermittelt werden. Aus den mehr oder weniger stark streuenden Fahrbahnrandwinkeln βᵢ kann dann ein mittlerer Fahrbahnrandwinkel β gebildet werden, zum Bespiel durch arithmetische Mittelung.

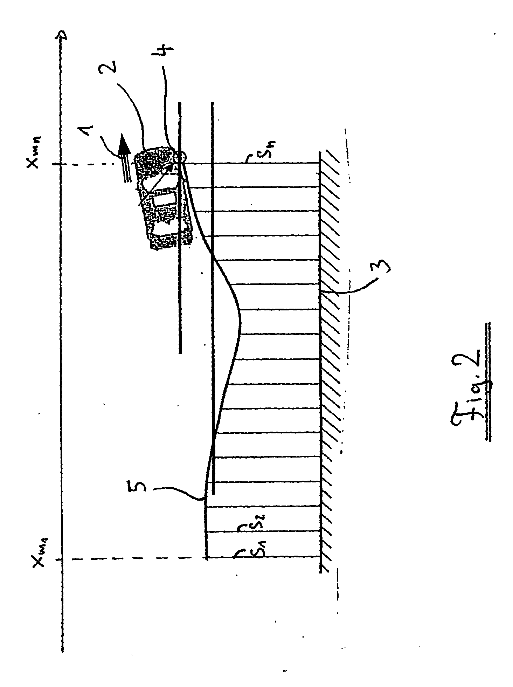

**Figur 2** erläutert das Grundprinzip zur Bestimmung des Abstandes des Fahrzeugs 2 oder genauer gesagt des fahrzeugfesten Abstandssensors 4. vom Fahrbahnrand 3.

Beim Vorbeifahren des Fahrzeuges 2 an einer Parklücke wird in regelmäßigen Abständen, das heißt an einer Vielzahl von Messpunkten X_{m1,}... Xₘₙ eine Abstandsmessung mit dem Abstandssensor 4 durchgeführt. Der Abstandssensor 4 liefert dementsprechend Messwerte s₁, s₁,...sₙ.

Bei einem Einparkvorgang fährt der Fahrer üblicherweise zunächst an der Parklücke vorbei, hält an und parkt rückwärts ein. Beim Vorbeifahren an der Parklücke lenken manche Fahrer kurz nach rechts zur Parklücke hin ein und fahren dann wieder schräg nach links vorne weiter. Eine derartige "Fahrzeugtrajektorie" ist in Figur 2 durch die Sensorspur 5 dargestellt.

Zur Bestimmung des momentanen Abstands zwischen dem Sensor 4 und dem Fahrbahnrand 3 würde prinzipiell eine einzige Abstandsmessung genügen. Wie bereits erläutert, können einzelne Messergebnisse durch Messfehler bzw. Störgrößen erheblich verfälscht sein. Aus diesem Grund wird ein Abstandsmittelwert ermittelt, der wie folgt bestimmt wird. Aus mehreren gemessenen Abstandswerten sᵢ werden die jeweilige Querbewegungs-Abstandskomponente und die jeweilige Fahrbahnrand-Abstandskomponente (vgl. oben) subtrahiert. Nach der Subtraktion wird aus den erhaltenen Werten ein Mittelwert gebildet. Zu diesem Mittelwert werden für die einzelnen Messintervalle die zuvor herausgerechneten Querbewegungs-Abstandskomponenten und die Fahrbahnrand-Abstandskomponenten hinzu addiert, woraus sich der momentane Abstand ergibt.

Da viele Messwerte die Basis für den Mittelwert bilden, stimmt der errechnete Abstandswert wesentlich besser mit dem tatsächlichen Abstand überein als dies bei einer Einzelmessung der Fall wäre.

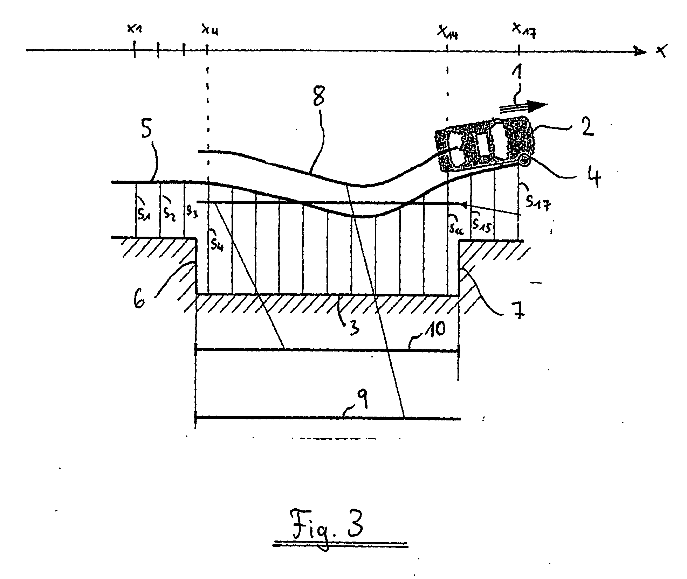

Figur 3 beschreibt das Grundprinzip zur Ermittlung der effektiven Länge einer Parklücke. Die Parklücke weist hier einen hinteren Parklückenrand 6, einen vorderen Parklückenrand 7 und einen seitlichen Fahrbahnrand bzw. Parklückenrand 3 auf.

Ähnlich wie bei Figur 2 wird bei dem hier gezeigten Ausführungsbeispiel beim Vorbeifahren an der Parklücke im Bereich der Parklücke kurz nach rechts eingelenkt und schräg nach links vorne weitergefahren, was an der Sensorspur 5 bzw. an der gefahrenen Spur 8 ersichtlich ist.

Wickelt man die Sensorspur 5 bzw. die gefahrene Spur 8 auf eine Gerade 9 ab, so ergibt sich die "Parklückenlänge ohne Berücksichtigung der Fahrzeugeigenbewegung". Es ist ersichtlich, dass die Parklückenlänge ohne Berücksichtigung der Fahrzeugeigenbewegung, d.h. die Strecke 9, länger ist als die "Parklückenlänge mit Berücksichtigung der Fahrzeugeigenbewegung", d.h. die Strecke 10. Die Strecke 10 entspricht der effektiven Parklückenlänge. Die effektive Parklückenlänge 10 kann durch Projektion des zurückgelegten Weges, das heißt durch Projektion der gefahrenen Spur 8 bzw. der Sensorspur 5 auf den Fahrbahnrand 3 ermittelt werden.

Rechnerisch wird dies dadurch erreicht, dass im Bereich der Parklücke für jedes Messintervall der vom Fahrzeug in den einzelnen Messintervallen zurückgelegte Weg jeweils unter Verwendung des zuvor ermittelten Winkels zwischen der Fahrzeuglängsachse und dem Fahrbahnrand (vgl. oben) in einen effektiven Längenabschnitt umgerechnet und über die einzelnen Messintervalle aufsummiert wird.

Die Lage des hinteren Parklückenendes 6 bzw. des vorderen Parklückenendes 7 kann dadurch ermittelt werden, dass das Abstandssignal, das vom Abstandssensor geliefert wird, einen positiven Sprung aufweist, wenn der Abstandssensor das hintere Parklückenende 6 passiert und einen negativen Sprung, wenn der Abstandssensor 4 das vordere Parklückenende 7 passiert.

Die Länge einer Parklücke wird also über den beim Passieren der Parklücke zurückgelegten Fahrzeugweg erfasst. Durch die Berücksichtigung des mathematischen Fahrzeugmodells und der Winkelerfassung zwischen der Fahrzeuglängsrichtung und dem Fahrbahnrand ist eine genaue Bestimmung der effektiven Parklückenlänge auch dann möglich, wenn das Fahrzeug nicht auf einer parallelen bzw. geraden Bahn an der Parklücke vorbeifährt.

Durch die Berücksichtigung der Fahrzeugeigenbewegung kann die genaue Lage einer erkannten Parklücke relativ zum Fahrzeug bei weiterer Fahrzeugbewegung berechnet werden. Zusammenfassend werden mit der Erfindung folgenden Vorteile erreicht:
- zur Unterstützung des Fahrers kann die Länge der Parklücke beispielsweise im Cockpit angezeigt werden
- eine Startposition für ein automatisches Einparksystem kann automatisch bestimmt werden
- eine genaue Vermessung einer Parklücke ist möglich, ohne dass Lenkbewegungen bzw. Geschwindigkeitsänderungen einen Einfluss auf das Messergebnis haben
- aufgrund zur Verfügung stehender genauer mathematischer Fahrzeugmodelle können einfache, kostengünstige Sensoren verwendet werden
- der Rechenaufwand ist im Vergleich zu komplexen Umgebungserfassungsalgorithmen vergleichsweise gering
- ein fest am Fahrzeug angeordneter Abstandssensor ist für eine genaue Erfassung einer Parklücke ausreichend. Die Abtastung der Umgebung erfolgt während der Fahrzeugbewegung.

## Patentansprüche

1. Verfahren zur Ermittlung von Geometriedaten für Einparkvorgänge von Fahrzeugen (2), wobei während des seitlichen Entlangfahrens eines Fahrzeugs (2) am Parkplatz mindestens zweimal, insbesondere mehrmals, nacheinander der seitliche Abstand (sᵢ) zwischen dem Fahrzeug (2) und einem Fahrbahnrand (3) mittels eines fahrzeugfest angeordneten Abstandssensors (4) gemessen wird und der Winkel (γ) zwischen einer Fahrzeuglängsachse (1) und dem Fahrbahnrand (3) bestimmt wird, durch
- Ermitteln eines sich beim Entlangfahren aus der Querbewegung des Fahrzeugs ergebenden Querbewegungswinkels (α) zwischen der momentanen Fahrzeuglängsrichtung (1) und einer vorgegebenen Längsrichtung (5),
- Ermitteln eines sich aus dem Konturverlauf des Fahrbahnrandes (3) ergebenden Fahrbahnrandwinkels (β) zwischen der vorgegebenen Längsrichtung (5) und dem Fahrbahnrand (3) und
- Ermitteln des Winkels (γ) zwischen der momentanen Fahrzeuglängsachse (1) und dem Fahrbahnrand (3) durch Addieren des Querbewegungswinkels (α) und des Fahrbahnrandwinkels (β), wobei der Querbewegungswinkel (α) folgendermaßen ermittelt wird:
- Ermitteln einer Querbewegungs-Abstandskomponente (s_{α}), die aus einer Querbewegung des Fahrzeugs (2) quer zu der vorgegebenen Längsrichtung (5) resultiert, wobei die Querbewegungs-Abstandskomponente (s_{α}) durch Messen des vom Fahrzeug (2) beim Entlangfahren zurückgelegten Weges und des Lenkzustandes des Fahrzeugs (2) mittels eines vorgegebenen Bewegungsmodells des Fahrzeugs (2) bestimmt wird und
- Ermitteln des Querbewegungswinkels (α) aus der Querbewegungs-Abstandskomponente (s_{α}) und dem vom Fahrzeug beim Entlangfahren zurückgelegten Weg, der Fahrbahnrandwinkel (β) folgendermaßen ermittelt wird:
- Ermitteln einer Fahrbahnrand-Abstandskomponente (s_{β}), die aus dem Konturverlauf des Fahrbahnrandes resultiert, wobei die Fahrbahnrand-Abstandskomponente (s_{β}) aus der Differenz der Differenz zweier nacheinander gemessener Abstände (s₂ - s₁) und der zugeordneten Querbewegungs-Abstandskomponente (s_{α}) ermittelt wird und
- Ermitteln des Fahrbahnrandwinkels (β) aus der Fahrbahnrand-Abstandskomponente und dem vom Fahrzeug (2) beim Entlangfahren zurückgelegten Weg, wobei bei einer Parklücke die Länge der Parklücke bestimmt wird, wobei
- aus dem beim Entlangfahren des Fahrzeugs (2) an der Parklücke vom Fahrzeug (2) zurückgelegten Weg und den an einzelnen Messpunkten (xᵢ) ermittelten Winkeln (γ) zwischen der Fahrzeuglängsachse (1) und dem Fahrbahnrand (3) eine effektive Parklückenlänge (10) ermittelt wird, welche einer Projektion des vom Fahrzeug (2) im Bereich der Parklücke zurückgelegten Weges auf den Fahrbahnrand (3) entspricht.

2. Verfahren nach Anspruch 1, wobei als vorgegebene Längsrichtung die Fahrtrichtung des Fahrzeugs (2) bei Geradeausfahrt vor Beginn der Querbewegung verwendet wird.

3. Verfahren nach einem der Ansprüche 1 oder 2, wobei beim Vorbeifahren mehrmals nacheinander Fahrbahnrandwinkel (βᵢ) bestimmt werden und zur Glättung von Messfehlern aus den Fahrbahnrandwinkeln (βᵢ) ein mittlerer Fahrbahnrandwinkel (β) gebildet wird.

4. Verfahren nach Anspruch 3, wobei der Winkel (γ) zwischen der Fahrzeuglängsachse (1) und dem Fahrbahnrand (3) durch Addieren des Querbewegungswinkels (α) und des mittleren Fahrbahnrandwinkels (β) ermittelt wird.

5. Verfahren nach einem der Ansprüche 1 bis 4, wobei der momentane Abstand (sₙ) zwischen dem Abstandssensor (4) und dem Fahrbahnrand (3) ein Abstandsmittelwert ist, wobei
- aus mehreren gemessenen Abstandswerten (sᵢ) die jeweilige Querbewegungs-Abstandskomponente (s_{α}) und die jeweilige Fahrbahnrand-Abstandskomponente (s_{β}), subtrahiert wird und aus den aus der Subtraktion erhaltenen Abstandswerten ein Mittelwert gebildet wird und
- der momentane Abstand (sₙ) durch Addition des Mittelwerts und der Querbewegungs-Abstandskomponenten (s_{α}, ᵢ) und der Fahrbahnrand-Abstandskomponente (s_{β, i}) ermittelt wird.

6. Verfahren nach einem der Ansprüche 1 bis 5, wobei das hintere Ende (6) der Parklücke als ein einen vorgegebenen Wert überschreitender positiver Sprung (s₄ - s₃) im ermittelten Abstand zwischen dem Abstandssensor (4) und dem Fahrbahnrand (3) angesehen wird und das vordere Ende (7) der Parklücke als ein einen vorgegebenen Wert überschreitender negativer Sprung (s₁₆ - s₁₅) im ermittelten Abstand zwischen dem Abstandssensor (4) und dem Fahrbahnrand (3) angesehen wird.

## Claims

1. A method of determining geometrical data for parking vehicles (2) in a gap, wherein while a vehicle (2) is moving alongside a car park the lateral distance (sᵢ) between the vehicle (2) and a road edge (3) is measured at least twice, more especially a number of times, in succession by a distance sensor (4) fixed to the vehicle, and the angle (γ)between a longitudinal axis (1) of the vehicle and the road edge (3) is determined by
- measuring a transverse motion angle (α), resulting from the transverse motion of the vehicle while driving alongside, between the instantaneous longitudinal direction (1) of the vehicle and a set longitudinal direction (5),
- determining a road edge angle (β), resulting from the curve of the road edge (3), between the set longitudinal direction (5) and the road edge (3) and
- determining the angle (γ) between the instantaneous longitudinal axis (1) of the vehicle and the road edge (3) by adding the transverse motion angle (α) and the road edge angle (β), wherein the transverse motion angle (α) is obtained as follows:
- determining a transverse-motion distance component (s_{α}) resulting from motion of the vehicle (2) transversely of the set longitudinal direction (5), wherein the transverse-motion distance component (s_{α}) is obtained by measuring the distance travelled alongside by the vehicle (2) and the steering state of the vehicle (2) using a set motion model of the vehicle (2), and
- determining the transverse motion angle (α) from the transverse-motion distance component (s_{α}) and the road edge angle (β) resulting from the distance travelled by the vehicle alongside, as follows:
- determining a road-edge distance component (s_{β}) resulting from the curve of the road edge, wherein the road-edge distance component (s_{β}) is obtained from the difference between two successively measured distances (s₂ - s₁) and the associated transverse-motion distance component (s_{α}) and
- determining the road edge angle (β) from the road-edge distance component and from the distance travelled by the vehicle (2) alongside, wherein the length of a parking gap, if present, is determined, wherein
- an effective parking length (10) corresponding to a projection on to the road edge (3) of the distance travelled by the vehicle (2) in the parking gap region, is determined from the distance travelled by the vehicle (2) when passing the gap, and the angles (γ) obtained at individual measuring points (xᵢ) between the road edge (3) and the longitudinal axis (1) of the vehicle (2).

2. A method according to claim 1, wherein the set longitudinal direction is the direction of travel of the vehicle (2) when moving straight ahead before the beginning of the transverse movement.

3. A method according to claim 1 or 2, wherein the road-edge angle (βᵢ) is repeatedly determined while the vehicle is moving paet and an average road-edge angle (β) is formed from the road edge angles (βᵢ) in order to even out errors in measurement.

4. A method according to claim 3, wherein the angle (γ) between the longitudinal axis (1) of the vehicle and the road edge (3) is obtained by adding the transverse motion angle (α) and the average road edge angle (β).

5. A method according to any of claims 1 to 4, wherein the instantaneous distance (sₙ) between the distance sensor (4) and the road edge (3) is an average distance value, wherein
- the respective transverse-motion distance component (s_{α}) and the respective road-edge distance component (s_{β}) are subtracted from a number of measured distance values (sᵢ) and an average is formed from the distance values obtained by subtraction and
- the instantaneous distance (sₙ) is obtained by adding the average value to the transverse-motion distance component (s_{α,i}) and the road-edge distance component (s_{β,i}).

6. A method according to any of claims 1 to 5, wherein the rear end (6) of the parking gap is regarded as a positive jump (s₄ - s₃), exceeding a set value, in the measured distance between the distance sensor (4) and the road edge (3) whereas the front end (7) of the parking gap is regarded as a negative jump (s₁₆₋s₁₅), exceeding a set value, in the distance measured between the distance sensor (4) and a road edge (3).

## Revendications

1. Procédé de détermination de données géométriques pour l'assistance au stationnement des véhicules (2), selon lequel on mesure successivement pendant le passage du véhicule (2) le long d'un emplacement libre au moins deux fois, en particulier plusieurs fois, la distance latérale (sᵢ) entre le véhicule (2) et le bord de la chaussée (3) au moyen d'un capteur de distance (4) du véhicule et on détermine l'angle (γ) formé par l'axe longitudinal du véhicule (1) et le bord de la chaussée (3) comme suit :
- détermination d'un angle de mouvement transversal (α), obtenu lors du passage à partir du mouvement transversal du véhicule, entre la direction longitudinale (1) momentanée du véhicule et une direction longitudinale (5) prédéterminée,
- détermination d'un angle de bord de chaussée (β), obtenu à partir de l'évolution du contour du bord de la chaussée (3), entre la direction longitudinale (5) prédéterminée et le bord de la chaussée (3), et
- détermination de l'angle (y) entre l'axe longitudinal (1) momentané du véhicule et le bord de la chaussée (3) par addition de l'angle de mouvement transversal (α) et de l'angle de bord de chaussée (β), l'angle de mouvement transversal (α) étant déterminé comme suit :
- détermination d'une composante de distance de mouvement transversal (s_{α} qui résulte d'un mouvement du véhicule (2) transversalement à la direction longitudinale (5) prédéterminée, la composante de distance de mouvement transversal (s_{α}) étant déterminée par la mesure du trajet parcouru par le véhicule (2) lors du passage et de l'état de direction du véhicule (2) au moyen d'un modèle de mouvement prédéterminé du véhicule (2), et
- détermination de l'angle de mouvement transversal (α) à partir de la composante de distance de mouvement transversal (s_{α}) et du trajet parcouru par le véhicule lors du passage, l'angle de bord de chaussée (β) étant déterminé comme suit :
- détermination d'une composante de distance de bord de chaussée (s_{β}) résultant de l'évolution du contour du bord de la chaussée, la composante de distance de bord de chaussée (s_{β}) étant déterminée à partir de la différence entre deux distances (s₂ - s₁) mesurées successivement et la composante de distance de mouvement transversal (s_{α}) associée, et
- détermination de l'angle de bord de chaussée (β) à partir de la composante de distance de bord de chaussée et du trajet parcouru par le véhicule (2) lors du passage, en déterminant pour un emplacement libre la longueur de celui-ci,
- en déterminant, à partir du trajet parcouru par le véhicule (2) lors de son passage le long de l'emplacement libre et des angles (γ), déterminés aux différents points de mesure (xᵢ), entre l'axe longitudinal du véhicule (1) et le bord de la chaussée (3), une longueur d'emplacement libre (10) effective correspondant à une projection du trajet parcouru par le véhicule (2) dans la zone de l'emplacement libre sur le bord de la chaussée (3).

2. Procédé selon la revendication 1,
**caractérisé en ce qu'**
on utilise comme direction longitudinale prédéterminée la direction de la marche du véhicule (2) lors d'un déplacement en ligne droite avant le début du mouvement transversal.

3. Procédé selon l'une quelconque des revendications 1 ou 2,
**caractérisé en ce que**
lors du passage on détermine, plusieurs fois successivement, des angles de bord de chaussée (βᵢ) et on forme à partir d'eux un angle de bord de chaussée moyen (β) pour lisser des erreurs de mesure.

4. Procédé selon la revendication 3,
**caractérisé en ce que**
l'angle (γ) formé par l'axe longitudinal du véhicule (1) et le bord de la chaussée (3) est déterminé par addition de l'angle de mouvement transversal (α) et de l'angle de bord de chaussée moyen (β).

5. Procédé selon l'une quelconque des revendications 1 à 4,
**caractérisé en ce que**
la distance momentanée (sₙ) entre le capteur de distance (4) et le bord de la chaussée (3) est une valeur moyenne, et
- on soustrait de plusieurs valeurs de distance (sᵢ) les composantes respectives de distance de mouvement transversal (s_{α}) et de bord de chaussée (s_{β}) et on forme une valeur moyenne à partir des valeurs obtenues suite à la soustraction, et
- on détermine la distance momentanée (sₙ) par addition de la valeur moyenne et des composantes de distance de mouvement transversal (s_{α}, ᵢ) et de la composante de distance de bord de chaussée (s_{β, i}).

6. Procédé selon l'une quelconque des revendications 1 à 5,
**caractérisé en ce que**
l'extrémité arrière (6) de l'emplacement libre est considérée comme un saut positif (s₄ - s₃) dans la distance déterminée entre le capteur de distance (4) et le bord de la chaussée (3) dépassant une valeur prédéterminée, et l'extrémité avant (7) de l'emplacement libre est considérée comme un saut négatif (s₁₆ - s₁₅) dans la distance déterminée entre le capteur de distance (4) et le bord de la chaussée (3) dépassant une valeur prédéterminée.
